# EUROPÄISCHE PATENTSCHRIFT

(11) **EP 4 658 432 B1**
(45) Veröffentlichungstag und Bekanntmachung des Hinweises auf die Patenterteilung: **09.12.2026**
(21) Anmeldenummer: 24705944.7
(22) Anmeldetag: 31.01.2024
(51) Int. Cl.: B21D 5/02, B21D 43/10, B25J 15/00

(54) **FERTIGUNGSANLAGE MIT EINEM MANIPULATOR**
PRODUCTION PLANT COMPRISING A MANIPULATOR
INSTALLATION DE PRODUCTION COMPRENANT UN MANIPULATEUR

(30) Priorität: 31.01.2023 AT 500522023
(43) Veröffentlichungstag der Anmeldung: 10.12.2025
(73) Patentinhaber: TRUMPF Maschinen Austria GmbH & Co. KG, 4061 Pasching (AT)
(72) Erfinder: DENKMEIER, Thomas, 4050 Traun (AT); KOVJENIC, Nenad, 4020 Linz (AT); MAIER, Florian, 4060 Leonding (AT)
(74) Vertreter: Burger, Hannes Alfred
(86) Internationale Anmeldenummer: PCT/AT2024/060027
(87) Internationale Veröffentlichungsnummer: WO 2024/159255

(56) Entgegenhaltungen:
- EP-B1- 2 533 918
- JP-A- H05 154 562
- US-B2- 7 210 328

## Beschreibung

Die Erfindung betrifft eine Fertigungsanlage zur Bearbeitung von plattenförmigen Bauteilen, die zumindest eine Umformmaschine aufweist, mit zumindest einer verstellbaren Aufnahmevorrichtung, welche eine Aufnahmeebene zur Zwischenlagerung der Bauteile definiert. Ferner weist sie zumindest einen Manipulator zur Handhabung der Bauteile auf; der dazu ausgebildet ist, die Bauteile bezüglich der Zwischenlagerung an der Aufnahmevorrichtung abzulegen und aufzunehmen.

Die Aufnahmevorrichtung umfasst einzelne, in der Aufnahmeebene verstellbare Aufnahmeelemente; wobei ein jeweiliges Aufnahmeelement eine Lagereinheit aufweist und mittels der Lagereinheit um eine senkrecht zur Aufnahmeebene angeordneten Lagerachse drehbar ist und entlang einer parallel zur Aufnahmeebene und senkrecht zu der Lagerachse angeordneten Stellrichtung in einem Abstand zur Lagerachse längenverstellbar ist.

Derartige Aufnahme- bzw. Ablagevorrichtungen in Fertigungsanlagen für Bauteile sind aus dem Stand der Technik bekannt. Beispielsweise finden diese Anwendung als Umgreifstationen für Manipulatoren, sodass der Manipulator das Bauteil ablegen kann und erneut aufgreifen, um z.B. das Bauteil der Umformmaschine besser zuführen zu können, oder auch dieses von einer anderen Seite aufgreifen zu können. Bevorzugt können diese Aufnahmevorrichtungen linear verfahrbar sein, sodass diese in einem Arbeitsbereich an der Maschine positioniert werden können, bzw. wieder aus diesem Bereich verfahren werden können.

Aus der US7210328 B2 ist eine Blechbearbeitungsanlage offenbart, die einen an einem Maschinengestell feststehend angeordneten Tischbalken und einem relativ zum Tischbalken verstellbaren Pressenbalken aufweist. Ferner weist die Anlage eine Ablagevorrichtung für zumindest einem Werkteil für eine Zwischenpositionierung zur Vornahme eines Umgreifvorganges einer Greifeinrichtung eines Manipulators an dem Werkteil auf, wobei die Ablagevorrichtung in Richtung einer Längserstreckung des Tischbalkens über zumindest einen Teil einer Länge in einer linearen Führungsanordnung verstellbar am Maschinengestell, bevorzugt am Tischbalken gelagert ist.

Nachteilig hinsichtlich der Aufnahmevorrichtungen aus dem Stand der Technik ist, dass deren Aufnahmeelemente nicht immer an die Werkstück- bzw. Bauteilgeometrie angepasst sind und durch einen Bediener verstellt werden müssen. Dies erfordert ein Einstellen der Aufnahmeelemente bezüglich deren Achsen per Hand, wodurch sich der Bediener in den Raum zwischen dem Manipulator und der Umformmaschine begeben muss und somit ein erhöhtes Sicherheitsrisiko gegeben ist.

Aufgabe der vorliegenden Erfindung war es, die Nachteile des Standes der Technik zu überwinden und eine Fertigungsanlage zur Verfügung zu stellen, mittels derer ein Benutzer in der Lage ist, eine Einstellung der Aufnahmevorrichtung und der Aufnahmeelemente erleichtert vorzunehmen, ohne dabei eine Bedienperson einem wesentlichen Gefahrenbereich der Fertigungsanlage auszusetzen.

Diese Aufgabe wird durch eine Fertigungsanlage gemäß den Ansprüchen gelöst.

Die erfindungsgemäße Fertigungsanlage zeichnet sich dadurch aus, dass der Manipulator eine Koppelungseinheit umfasst, wobei mittels der Koppelungseinheit ein Koppelungszustand mit den jeweiligen Aufnahmeelementen herstellbar ist, und die Aufnahmeelemente im Koppelungszustand mittels des Manipulators bezüglich der Lagerachse drehbar und/oder bezüglich der Stellrichtung verstellbar sind.

Mittels der erfindungsgemäßen Ausbildung kann die Betriebssicherheit für Personen in einer Fertigungsanlage dahingehend erhöht werden, dass ein Aufenthalt von Bedienpersonen im Anlagenbereich zur Einstellung der Aufnahmevorrichtung nicht mehr erforderlich ist.

Ferner können mittels einer erfindungsgemäßen Ausbildung die Warte- bzw. Standzeiten der Fertigungsanlage verringert werden, da keine zusätzlichen Vorgänge bzw. Abschaltungen der Maschinen erforderlich sind.

Bevorzugt kann die Aufnahmevorrichtung derart ausgebildet sein, dass die Aufnahmeelemente ausschließlich passive Koppelungselemente zur Verbindung mit der Koppelungseinheit aufweisen, sodass sämtliche Verstell- und Drehantriebe sowie Sensoriken an der Koppelungseinheit (bzw. am Manipulator) angeordnet sind, welche die zugehörigen Koppelungselemente an der Aufnahmevorrichtung im Koppelungszustand betreiben, verstellen bzw. erfassen. So kann die Aufnahmevorrichtung mechanisch einfach ausgebildet sein und ist dennoch hochautomatisiert verstellbar.

In einer möglichen Ausführungsform kann vorgesehen sein, dass die Koppelungseinheit ein Eingriffselement zur Drehung des Aufnahmeelementes bezüglich der Lagerachse aufweist, wobei am Aufnahmeelement zumindest ein Eingriffsabschnitt zur Koppelung mit dem Eingriffselement vorgesehen ist. So kann mittels einer einfachen Bewegung des Manipulators bzw. der Koppelungseinheit im Koppelungszustand über einen mechanischen Eingriff, Formschluss oder dergleichen die Drehung der Aufnahmeelemente durchführbar sein.

Eine mögliche Weiterbildung sieht vor, dass das Eingriffselement und der Eingriffsabschnitt ferner zur Verstellung bezüglich der Stellrichtung ausgebildet sind. Vorteilhaft bei dieser Ausführungsform ist, dass mittels einem einzigen Element der Koppelungseinheit die Drehung und Verstellung der Aufnahmeelemente gleichzeitig durchgeführt werden kann.

Ferner kann vorgesehen sein, dass das Aufnahmeelement einen Stellmechanismus zum Verstellen des Abstandes des Aufnahmeelementes gegenüber der Lagereinheit bezüglich der Stellrichtung umfasst und dass die Koppelungseinheit einen Antriebsmechanismus umfasst, wobei mittels des Antriebsmechanismus der Stellmechanismus verstellbar ist. Vorteilhaft bei dieser Ausführungsform ist, dass zum einen eine präzise Einstellung der Aufnahmeelemente über den Stellmechanismus möglich ist und dass keine translatorische Bewegung des Manipulators bezüglich dieser Verstellung erforderlich ist, wodurch umliegende Bauteile etc. nicht berücksichtigt werden müssen.

Diesbezüglich sieht eine Weiterbildung vor, dass der Stellmechanismus eine Verzahnung aufweist, wobei mittels des Antriebsmechanismus ein mit der Verzahnung in Wirkeingriff bringbares Antriebselement antreibbar ist. Das Antriebselement z.B. ein am Aufnahmeelement gelagertes, antreibbares Ritzel sein. Weiters kann es auch am Koppelungselement angeordnet sein.

Eine bevorzugte Ausgestaltung sieht vor, dass am Aufnahmeelement ein Positionierungsmittel zur Feststellung einer aktuellen Drehposition des Aufnahmeelementes bezüglich der Lagerachse vorgesehen ist, wobei das Positionierungsmittel mittels der Koppelungseinheit erfassbar ist. Mittels eines Positionierungsmittel ist eine automatische Ausrichtung der Koppelungseinheit bezüglich der Drehstellung des Aufnahmeelementes zur Herstellung des Koppelungszustandes ermöglicht. Ferner ist dadurch die Bestimmung des Abstandes des Aufnahmeelementes bezüglich der Lagerachse leichter durchführbar.

Eine Weiterbildung sieh vor, dass das Positionierungsmittel ein Permanentmagnet ist. Mittels eines Permanentmagneten ist eine eindeutige Positionserkennung aufgrund dessen Magnetfeldes detektierbar, z.B. mittels eines Hall-Sensors.

In einer möglichen Ausgestaltung kann vorgesehen sein, dass am Aufnahmeelement ein Referenzmittel zur Feststellung einer Längsposition des Aufnahmeelementes bezüglich der Stellrichtung vorgesehen ist, wobei das Referenzmittel mittels der Koppelungseinheit erfassbar ist. Das Referenzmittel kann zur Bestimmung des Abstandes vorgesehen sein, bzw. mittels des Referenzmittels der Abstand direkt messbar sein. Ferner kann vorgesehen sein, dass das Referenzmittel zur Detektion einer Ausgangsposition zur Einstellung des Abstandes vorgesehen ist. So kann beispielsweise das Referenzmittel einen Fixierungspunkt für die Koppelungseinheit ausbilden, welcher zuerst für die Verstellung des Aufnahmeelementes angefahren wird und ab dem Erreichen des Fixierungspunktes der Abstand des Aufnahmeelementes eingestellt wird.

Eine mögliche Weiterbildung sieht vor, dass die Koppelungseinheit eine Näherungssensorik umfasst, wobei mittels des Referenzmittels eine messbare Größe der Näherungssensorik ausgebildet ist. Mittels dieser Ausgestaltung kann ferner der Abstand über die Näherungssensorik einstellbar sein. Die Näherungssensorik kann wiederum einen Magnet umfassen, aber auch optische Mittel, z.B. einen Senor und Empfänger, wobei bevorzugt ein passives Element, z.B. ein Reflektor, am Aufnahmeelement ausgebildet ist.

Eine mögliche Ausführungsvariante sieht vor, dass das Aufnahmeelement eine Arretierungseinheit aufweist, wobei die Arretierungseinheit mittels der Koppelungseinheit im Koppelungszustand entriegelbar ist und das Aufnahmeelement mittels der Arretierungseinheit außerhalb des Koppelungszustand bezüglich zumindest einer der folgenden Bewegungen verriegelt ist:
- eine Drehung des Aufnahmeelementes bezüglich der Lagerachse;
- eine Verstellung des Aufnahmeelementes bezüglich der Stellrichtung.

Mittels dieser Variante kann einer unbeabsichtigten Verstellung der Aufnahmeelemente verhindert werden und gleichzeitig eine leichtgängige Verstellung im Koppelungszustand ermöglicht werden, sodass die dafür verantwortlichen Mechanismen kleiner und wirtschaftlicher ausgebildet werden können.

Eine weitere mögliche Ausführung sieht vor, dass das Aufnahmeelement bezüglich der Verstellung entlang der Stellrichtung und/oder der Drehung bezüglich der Lagerachse ein Reibelement aufweist, sodass eine jeweilige Bewegung des Aufnahmeelementes bezüglich der Drehung und/oder Verstellung schwergängig ist. So kann abhängig von der Verstellbewegung durch die Koppelungseinheit und/oder dem Manipulator einem unbeabsichtigten Weiterbewegen bezüglich des Verstellvorganges vorgebeugt werden, sowie auch einem unbeabsichtigten Verstellen der Aufnahmeelemente generell.

Eine mögliche Weiterbildung sieht vor, dass das Aufnahmeelement zumindest eine Rückstellanordnung aufweist, wobei mittels der Rückstellanordnung das Aufnahmeelement bezüglich der Verstellung entlang Stellrichtung und/oder bezüglich der Drehung um die Lagerachse in eine vorbestimmte Ausgangsposition rückstellbar ist, wobei die Rückstellanordnung mittels der Koppelungseinheit betätigbar ist. Vorteilhaft bei dieser Ausführungsform ist, dass auf eine jeweilige Lage oder Abstandsensorik verzichtet werden kann, da die Koppelungseinheit die Aufnahmeelemente bezüglich der Lagerachse anfährt und die Rückstellung aktivieren kann, sodass die jeweiligen Bewegung in die zugehörige Ausgangsposition veranlasst wird, wodurch das Aufnahmeelement automatisch in eine Referenzposition für den Manipulator verstellt wird. Die Rückstellung kann automatisch im Koppelungszustand erfolgen oder separat durch die Koppelungseinheit betätigbar sein. Bevorzugt kann die Rückstellung mit einer zuvor erwähnten Arretierungseinheit gekoppelt sein.

In einer bevorzugten Ausgestaltung kann vorgesehen sein, dass die Aufnahmevorrichtung zumindest zwei Aufnahmeeinheiten umfasst, wobei die Aufnahmeeinheiten in einer Richtung parallel zur Aufnahmeebene zueinander verstellbar sind und jeweils die einzelnen Aufnahmeelemente aufweisen. So kann die Aufnahmevorrichtung z.B. zwei symmetrisch zueinander ausgebildete Aufnahmeeinheiten umfassen, deren Abstand zueinander bezüglich der Aufnahmeebene einstellbar ist. Dadurch kann zusätzlich zu den einzelnen Aufnahmeelementen eine Anordnung von Aufnahmeelementen bezüglich einer Aufnahmeeinheit verstellbar sein.

Darüber hinaus kann vorgesehen sein, dass die Koppelungseinheit dazu ausgebildet ist, mehrere Aufnahmeelemente gleichzeitig jeweils bezüglich der Lagerachse zu drehen und/oder bezüglich der Stellrichtung zu verstellen. So können mittels einer Koppelungseinheit mehrere Aufnahmeelemente gleichzeitig in den Koppelungszustand versetzt werden, wobei die Koppelungseinheit bevorzugt die jeweiligen Mechanismen und Sensoren mehrfach aufweist, und diese bezüglich eines jeweiligen Aufnahmeelementes gesondert angetrieben und verstellt werden können. Bevorzugt kann bei Verwendung von einzelnen Aufnahmeeinheiten die Koppelungseinheit zumindest alle Aufnahmeelemente einer Aufnahmeeinheit verstellen.

Eine mögliche Ausführungsform sieht vor, dass die Koppelungseinheit als ein auswechselbarer Werkzeugkopf des Manipulators ausgebildet ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsanlage mit einer Umformmaschine, einem Manipulator und einer Aufnahmevorrichtung mit einzelnen Aufnahmeelementen;
- Fig. 2: a) bis c) einzelne, mögliche Ausführungsformen der Aufnahmeelemente in Draufsicht sowie Ausführungen der Koppelungseinheit;
- Fig. 3: eine mögliche Ausführungsform eines Aufnahmeelementes und einer Koppelungseinheit, teilweise geschnitten;
- Fig. 4: die Ausführungsform nach Fig. 3 in Draufsicht;
- Fig. 5: eine weitere mögliche Ausführungsform eines Antriebsmechanismus mit einem Stellmechanismus, teilweise geschnitten;
- Fig. 6: die Ausführungsform nach Fig. 5 in Draufsicht;
- Fig. 7: eine mögliche Ausführung eines Aufnahmeelementes mit einer Kulisse;
- Fig. 8: a) und b) ein Aufnahmeelement mit einer Rückstellanordnung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

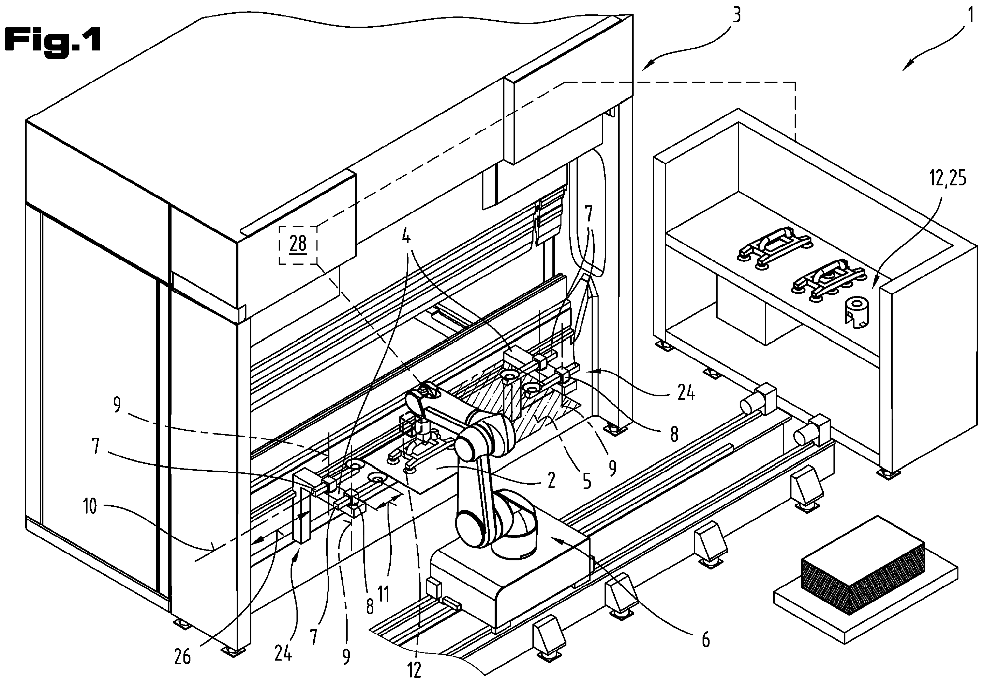

In Fig. 1 ist eine mögliche Fertigungsanlage 1 zur Bearbeitung von plattenförmigen Bauteilen 2 dargestellt.

Sie umfasst zumindest eine Umformmaschine 3 zum Umformen der Bauteile 2, wie dargestellt kann die Umformmaschine 3 als eine Biegemaschine bzw. Abkantpresse oder dergleichen ausgebildet sein.

Bevorzugt an der Umformmaschine 3 ist zumindest eine verstellbare Aufnahmevorrichtung 4 vorgesehen, wobei mittels der Aufnahmevorrichtung 4 eine Aufnahmeebene 5 zur Zwischenlagerung der Bauteile 2 definiert ist. Wie angedeutet kann die Aufnahmevorrichtung 4 bezüglich einer Richtung 26 gegenüber der Umformmaschine 3 verstellbar sein. Wenn es sich bei der Umformmaschine um eine Biegemaschine handelt, ist die Richtung 26 bevorzugt parallel zur Biegelinie.

Der zumindest eine Manipulator 6 zur Handhabung der Bauteile 2 ist dazu ausgebildet, die Bauteile 2 bezüglich der Zwischenlagerung an der Aufnahmevorrichtung 4 abzulegen und aufzunehmen.

Die Aufnahmevorrichtung 4 kann ferner zumindest zwei Aufnahmeeinheiten 24 umfassen, welche bezüglich der Richtung 26 und bevorzugt parallel zur Aufnahmeebene 5 und zueinander verstellbar sind. Mittels der Aufnahmeeinheiten 24 kann zusätzlich eine Breite der Aufnahmevorrichtung bezüglich eines aufzunehmenden Bauteils 2 adaptiert werden, bzw. die Aufnahmevorrichtung 4 auch aus einem Arbeitsbereich des Manipulators 6 entfernt werden.

Die Aufnahmevorrichtung 4 umfasst einzelne, in der Aufnahmeebene 5 verstellbare Aufnahmeelemente 7; wobei ein jeweiliges Aufnahmeelement 7 eine Lagereinheit 8 aufweist und mittels der Lagereinheit 8 um eine senkrecht zur Aufnahmeebene 5 angeordneten Lagerachse 9 drehbar ist und entlang einer parallel zur Aufnahmeebene 5 und senkrecht zu der Lagerachse 9 angeordneten Stellrichtung 10 in einem Abstand 11 zur Lagerachse 9 längenverstellbar ist.

An diesem Punkt sei erwähnt, dass die Aufnahmeelemente 7 der jeweiligen Aufnahmeeinheiten 24 bevorzugt einander zugewandt angeordnet sind, wie in Fig. 1 dargestellt, wodurch die Ausbildung der jeweiligen Aufnahmeeinheiten 24 symmetrisch zueinander ausgebildet sein kann.

Erfindungsgemäß umfasst der Manipulator 6 eine Koppelungseinheit 12, wobei mittels der Koppelungseinheit 12 ein Koppelungszustand mit den jeweiligen Aufnahmeelementen 7 herstellbar ist, und dass die Aufnahmeelemente 7 im Koppelungszustand mittels des Manipulators 6 bezüglich der Lagerachse 9 (in einem Drehwinkel) drehbar und/oder bezüglich der Stellrichtung 10 verstellbar sind. Je nach Ausgestaltung der Koppelungseinheit 12 kann auch vorgesehen sein, dass mehrere Aufnahmeelemente 7 gleichzeitig mittels der Koppelungseinheit 12 in dem Koppelungszustand einstellbar sind.

Die Koppelungseinheit 12 weist dabei bevorzugt die zur Verstellung notwendigen Antriebsmittel, Drehgeber und Sensoriken auf, welche mit dem Manipulator betreibbar sind, bzw. zumindest über den Manipulator mittels Energie versorgbar sind.

Wie ferner angedeutet, kann die Koppelungseinheit 12 auch als ein auswechselbarer Werkzeugkopf 25 des Manipulators 6 ausgebildet sein, welcher beispielsweise von einem Werkzeugmagazin aufgenommen werden kann.

Alternativ kann die Koppelungseinheit 12 auch ein am Manipulator separat angeordnetes Aggregat ausbilden, welches auch bei Verwendung eines Greifkopfes oder dergleichen am Manipulator verbleibt und zur Einstellung der Aufnahmevorrichtung z.B. eingeschwenkt werden kann. Ferner kann auch die Koppelungseinheit eine eigene Recheneinheit etc. aufweisen, und über Schnittstellen mit den Manipulator bzw. dessen Steuerungseinheit datentechnisch verbunden sein.

Bevorzugt weist die Fertigungsanlage 1 weiters eine Steuerungsvorrichtung 28 auf, welche sich in Kommunikationsverbindung mit dem Manipulator 6, sowie der Umformmaschine 3 und einen Verstellantrieb der Aufnahmevorrichtung (bezüglich der Richtung 26) befindet.

Die Aufnahmeelemente 7 sind in den Figuren als Sauger-Arme mit einzelnen Saugnäpfen dargestellt, wobei die Erfindung nicht auf diese Ausführung eingeschränkt ist und die Aufnahmeelemente auch andere Teile zur Aufnahme eines Bauteils 2 aufweisen können, sowie auch mehrere Saugnäpfe pro Arm, etc. Die Anzahl der Aufnahmeelemente der Aufnahmevorrichtung kann variabel sein und bezüglich der Aufnahmeeinheit unterschiedlich zueinander sein, wobei bevorzugt 4 Aufnahmeelemente pro Aufnahmeeinheit vorgesehen sein können.

Unabhängig von der Ausführung der Aufnahmeelemente 7 ist die Koppelungseinheit 12 (bzw. der Manipulator) derart ausgebildet, dass die Position des Aufnahmeelementes 7 gegenüber der Aufnahmevorrichtung 4 bzw. gegenüber der Umformmaschine mittels der Position der Lagerachse 9 bestimmbar ist, welche bevorzugt ortsfest bezüglich der Aufnahmevorrichtung 4 ist. Dadurch kann bezüglich der Lagerachse 9 die Drehstellung des Arms des Aufnahmeelementes 7 ermittelt werden, wodurch der Manipulator eine Orientierung der Stellrichtung erkennt.

Die Position der Aufnahmevorrichtung 4 bzw. der Aufnahmeeinheiten 24 bezüglich der Richtung 26 in Fig. 1 ist dem Manipulator grundsätzlich durch die Steuerungsvorrichtung bekannt, bezüglich welcher Richtung 26 die jeweiligen Lagerachsen 9 somit ebenfalls bekannt sind. Gleiches gilt für eine etwaige Höhenverstellung der gesamten Aufnahmevorrichtung z.B. senkrecht auf die Aufnahmeebene, sowie eine Verstellung der Aufnahmevorrichtung entlang einer Richtung zur Umformmaschine hin.

Zur Vollständigkeit sei an diesen Punkt erwähnt, dass bezüglich der Steuerung des Manipulators die Bauteilgeometrie eines zu biegenden bzw. bearbeitenden Bauteils bekannt sind und anhand dieser Daten die einzustellenden Parameter der einzelnen Aufnahmeelemente der Aufnahmevorrichtung ableitbar sind und somit die jeweiligen Befehle an den Manipulator (mitsamt der Koppelungseinheit), abhängig von den jeweiligen Bauteilgeometrien ausgegeben werden können. Bzw. kann die Steuerungsvorrichtung des Manipulators bevorzugt dazu eingerichtet sein, die Aufnahmeelemente bezüglich der Lagerachse und der Stellrichtung abhängig von der Bauteilgeometrie eines zu bearbeitenden Werkstücks einzustellen.

Zur Verstellung der Aufnahmeelemente 7 bezüglich der Stellrichtung 10 und/oder der Lagerachse 9 können unterschiedliche Ausführungen und Mechanismen vorgesehen sein, welche an der Koppelungseinheit 12 und der Aufnahmevorrichtung 4 vorgesehen sind, wobei bevorzugt an der Aufnahmevorrichtung 4 bzw. der Aufnahmeelemente 7 passive Koppelungselemente vorgesehen sind, welche mittels der Koppelungseinheit 12 aktivierbar, detektierbar bzw. antreibbar sind.

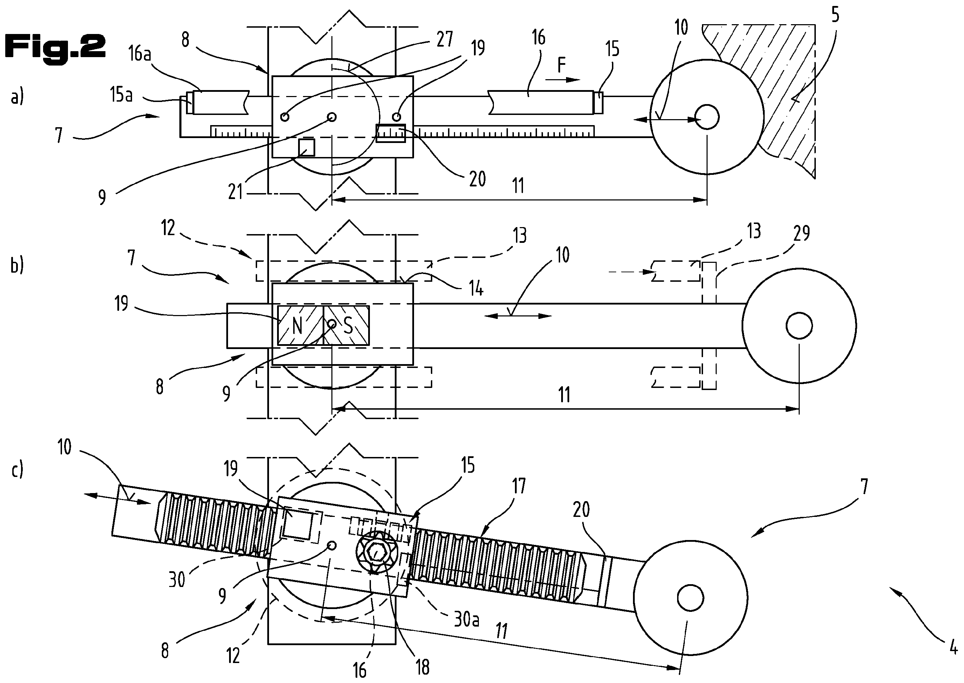

Diesbezüglich sind in Fig. 2 unterschiedliche mögliche Ausführungsformen der Aufnahmeelemente bezüglich deren Verstellung entlang der Stellrichtung 10 sowie bezüglich der Drehung um die Lagerachse 9 dargestellt.

An diesen Punkt sei erwähnt, dass die einzelnen in Fig. 2 a) bis c) dargestellten Varianten der Aufnahmeelemente 7 bezüglich der Verstellung entlang der Stellrichtung unabhängig von der in derselben Abbildung dargestellten Variante der Drehung um die Lagerachse ausgebildet sein können und in unterschiedlichsten Kombinationen der einzeln dargestellten Varianten bezüglich Drehung und Verstellung miteinander ausgebildet sein können.

Bezüglich einer gesamten Aufnahmevorrichtung können jedoch vorzugsweise alle Aufnahmeelemente zur Koppelung mit der Koppelungseinheit gleichartig ausgebildet sein, wodurch somit alle Aufnahmeelemente dieselbe ausgewählte Kombination aus den dargestellten möglichen Ausführungen aufweisen.

Zur Detektion des Abstandes 11 kann diesbezüglich am Aufnahmeelement 7 ein Referenzmittel 20 für eine Längsposition des Aufnahmeelementes 7 bezüglich der Stellrichtung 10 vorgesehen sein, wobei das Referenzmittel 20 mittels der Koppelungseinheit 12, bzw. einer Detektionseinheit 30 erfassbar ist.

Bevorzugt kann an dem Aufnahmeelement 7 ein Positionierungsmittel 19 für eine aktuelle Drehposition des Aufnahmeelementes 7 bezüglich der Lagerachse 9 vorgesehen ist, wobei das Positionierungsmittel 19 mittels der Koppelungseinheit 12 erfassbar ist. Diesbezüglich kann an der Koppelungseinheit 12 eine geeignete Detektionseinheit 30 vorgesehen sein.

In einer möglichen Ausführungsform kann vorgesehen sein, dass das Aufnahmeelement 7 einen Stellmechanismus 15 zum Verstellen des Abstandes 11 des Aufnahmeelementes 7 gegenüber der Lagereinheit 8 bezüglich der Stellrichtung 10 umfasst und dass die Koppelungseinheit 12 einen Antriebsmechanismus 16 umfasst, wobei mittels des Antriebsmechanismus 16 der Stellmechanismus 15 verstellbar ist.

In Fig. 2, a) ist der Antriebsmechanismus 16, 16a in Form eines linearen Stellantriebes ausgebildet, welcher mittels der jeweiligen Stellmechanismen 15, 15a in Form von Endanschlägen das Aufnahmeelement 7 bezüglich der Stellrichtung 10 verstellt, wie mit dem Kraftpfeil F angedeutet ist. Die Koppelungseinheit selbst, welche den Antriebsmechanismus aufweist, ist nicht dargestellt. Der lineare Stellantrieb kann dabei einzelne Teleskopelemente oder dergleichen aufweisen, welche in Richtung der Stellmechanismen 15, 15a entsprechend dem einzustellenden Abstand 11 verfahren werden. Bei dieser Ausführungsform kann grundsätzlich auf ein Referenzmittel 20 verzichtet werden, da aufgrund der Verstellbewegung zu den jeweiligen Stellmechanismen 15, 15a automatisch der Abstand einstellbar ist, da bei Erreichen der jeweiligen Endposition das Aufnahmeelement 7 zwischen den beiden Endanschlägen somit in die gewünschte Position verschoben ist.

Ferner kann vorgesehen sein, dass das Positionierungsmittel 19 mittels eines 2-Punkt-Referenzsystems gebildet ist, wie ebenfalls in Fig. 2, a) dargestellt. Bezüglich dieser Ausführungsform kann vorgesehen sein, dass die Aufnahmeelemente 7 beispielsweise bezüglich einem Bereich von weniger als 180° bezüglich der Lagerachse 9 drehbar sind, sodass mittels der 2 Punkte eine eindeutige Orientierung (bzw. Drehwinkel) des Aufnahmeelementes 7 bestimmbar ist. Diesbezüglich ist ein Bewegungsbereich 27 angedeutet, in welchen die Aufnahmeelemente 7 in der Aufnahmeebene 5 drehbar sind, wobei dieser Bewegungsbereich 27 grundsätzlich für alle möglichen Ausführungsformen der Aufnahmeelemente vorgesehen sein kann. Die erwähnte 2-Punkt Sensorik kann unterschiedlich messbar sein z.B. optisch, oder auch mit einer geeigneten Näherungssensorik.

Ferner kann das Referenzmittel 20 in Form einer Skala ausgebildet sein, welches über ein Fenster mittels der Koppelungseinheit 12 bzw. der Detektionseinheit erfassbar ist, wie ebenfalls in Fig. 2, a) angedeutet ist. Die Skala kann ebenfalls optisch erfassbar sein.

Das Aufnahmeelement 7 kann ferner unabhängig von der Ausführung eine Arretierungseinheit 21 aufweisen, wobei mittels der Arretierungseinheit 21 das Aufnahmeelement 7 bezüglich der Drehung um die Lagerachse 9 und/oder der Verstellung bezüglich der Stellrichtung 10 verriegelt ist und die Arretierungseinheit 21 mittels der Koppelungseinheit 12 im Koppelungszustand entriegelbar ist, sodass das Aufnahmeelement 7 bezüglich der Drehung um die Lagerachse 9 und/oder der Verstellung bezüglich der Stellrichtung 10 entriegelt und beweglich ist.

Das Referenzmittel 20 kann ebenfalls mittels eines Magneten ausgebildet sein, oder andere auswertbare oder lesbare Mittel umfassen, welche mittels der Koppelungseinheit 12 erfassbar sind. In einer Ausführungsform kann vorgesehen sein, dass die Koppelungseinheit 12 entlang der Stellrichtung 10 den Abstand 11 des Aufnahmeelementes 7 erfasst, bzw. ermittelt, z.B. über optische Mittel, wie einen Sender/Empfänger bzw. Reflektor. Diesbezüglich sei auf den Stand der Technik bezüglich Näherungssensoren hingewiesen, wobei am Aufnahmeelement bevorzugt ein passiver Teil der Näherungssensorik angeordnet sein kann.

Der Stellmechanismus 15 kann zudem eine Verzahnung 17 aufweisen, wobei mittels des Antriebsmechanismus 16 ein mit der Verzahnung 17 in Wirkeingriff bringbares Antriebselement 18 antreibbar ist. Das Antriebselement 18 kann an dem Aufnahmeelement 7 oder an der Koppelungseinheit 12 angeordnet sein. Wie in Fig. 2, c) dargestellt, kann der Stellmechanismus 15 noch weitere Teile aufweisen, wie mit dem strichliert dargestellten Zahnrad angedeutet ist.

Ferner ist in Fig. 2, c) unabhängig von der Ausführung bezüglich der Verstellmechanismen eine Detektionseinheit 30 der Koppelungseinheit 12 angedeutet, wobei am Aufnahmeelement 7 bezüglich der Stellrichtung das Referenzmittel 20 in Form eines Reflektors ausgebildet ist und die Koppelungseinheit eine Sender/Empfänger Anordnung zur Bestimmung des Abstandes 11 aufweist, wie strichliert mit der Detektionseinheit 30a angedeutet ist.

An diesem Punkt sei zur Vollständigkeit erwähnt, dass die Detektionseinheit 30 unabhängig von der gezeigten Ausführung bezüglich dem Referenzmittel 20 und dem Positionierungsmittel 19 an der Koppelungseinheit 12 separat angeordnete und verstellbare Elemente aufweisen kann.

Wie dargestellt kann das Positionierungsmittel 19 einen Permanentmagneten umfassen, wie eingangs erwähnt, dessen Ausrichtung mittels einer Sensorik der Koppelungseinheit 12 detektierbar ist, z.B. ein Hall-Sensor, wie eingangs erwähnt.

Eine weitere mögliche Ausführungsform sieht vor, dass die Koppelungseinheit 12 ein Eingriffselement 13 zur Drehung des Aufnahmeelementes 7 bezüglich der Lagerachse 9 aufweist, wobei am Aufnahmeelement 7 zumindest ein Eingriffsabschnitt 14 zur Koppelung mit dem Eingriffselement 13 vorgesehen ist. Der Eingriffsabschnitt 14 kann beispielweise mittels einer einfachen geometrischen Form gebildet sein, z.B. durch die Lagereinheit 8 des Aufnahmeelementes 7, wobei die Koppelungseinheit 12 eine komplementäres Eingriffselement 13 aufweisen kann, wie in Fig. 2, b) angedeutet ist. Ferner ist eine weitere mögliche Ausführung zur Verstellung bezüglich der Stellrichtung 10 angedeutet, indem die Koppelungseinheit 12 mit dem Eingriffselement 13 vor bzw. nach dem Drehvorgang um die Lagerachse 9 entlang der Stellrichtung 10 in eine gewünschte Position verfährt, um das Aufnahmeelement 7 mittels Anschlagelemente 29 in Stellrichtung 10 mitzunehmen (bzw. entgegen dieser zurückzuschieben). Ferner kann am Eingriffselement 13 ein nicht dargestelltes Tastelement angeordnet sein, welche einen Kontakt mit dem Anschlagelement 29 feststellt, wodurch z.B. auch der Abstand 11 ermittelbar sein kann. Bezüglich einer derartigen Verschiebung können zuvor erwähnte Reibelemente vorgesehen sein.

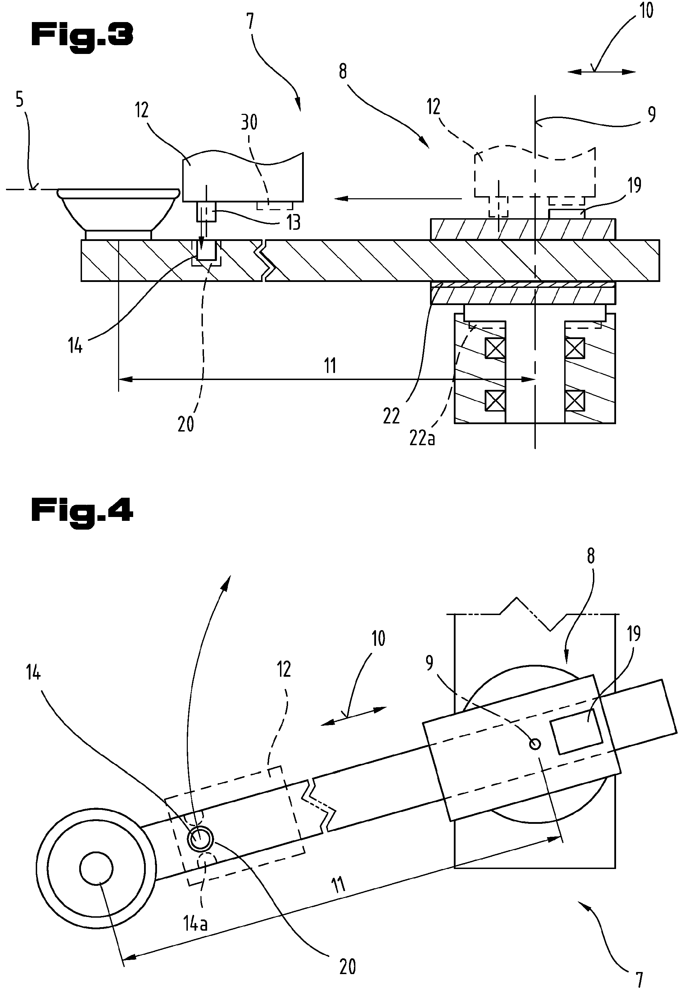

Eine weitere Ausführungsform der Koppelungseinheit 12 mit einem Eingriffselement 13, das zur Drehung des Aufnahmeelementes 7 bezüglich der Lagerachse 9 mittels des Eingriffsabschnittes 14 ausgebildet ist und ferner zur Verstellung bezüglich der Stellrichtung 10 ausgebildet ist, ist in den Figuren 3 und 4 gezeigt. Wie dargestellt kann sich die Koppelungseinheit 12 zuerst an der Lagerachse 9 orientieren (bevorzugt wieder mit einem Positionierungsmittel 19 und einer Detektionseinheit 30) und verfährt dann entlang der Stellrichtung 10 in Richtung des am Arm des Aufnahmeelementes 7 angeordneten Referenzmittels 20, welches ebenfalls durch den Eingriffsabschnitt 14 gebildet, oder in dessen Bereich angeordnet sein kann. Nach erfolgreicher Detektion erfolgt ein Verstellen des Eingriffselementes 13 in den Eingriffsabschnitt 14 mittels dessen das Aufnahmeelement entlang der Stellrichtung 10 verstellbar ist und bezüglich der Lagerachse 9 drehbar ist.

Der Eingriffsabschnitt 14 kann unterschiedlich ausgebildet sein, und auch randseitig am Aufnahmeelement 7 angeordnet sein, sodass das Eingriffselement bezüglich der Drehrichtung um die Lagerachse 9 von der jeweiligen Seite eingreift, wie mit dem Eingriffsabschnitt 14a angedeutet ist. Alternativ kann auch eine Greifvorrichtung als Eingriffselement vorgesehen sein, wobei der Eingriffsabschnitt z.B. nur eine Referenzposition oder dergleichen aufweist.

Weiters kann unabhängig von der Ausführungsform der Aufnahmeelemente 7 vorgesehen sein, dass das Aufnahmeelement 7 bezüglich der Verstellung entlang der Stellrichtung 10 und/oder der Drehung bezüglich der Lagerachse 9 ein Reibelement 22 aufweist, sodass eine jeweilige Bewegung des Aufnahmeelementes 7 schwergängig ist. Diesbezüglich sind jeweils die Reibelemente 22, 22a angedeutet.

Dabei sei erwähnt, dass bezüglich einer Verstellung der Koppelungseinheit 12 senkrecht zur Aufnahmeebene 5 dem Manipulator grundsätzlich die Höhenposition bezüglich dieser senkrechten Richtung aufgrund der Position der Aufnahmevorrichtung bekannt ist, , wobei zusätzliche Sensoriken bezüglich der Höhenverstellung vorgesehen sein können.

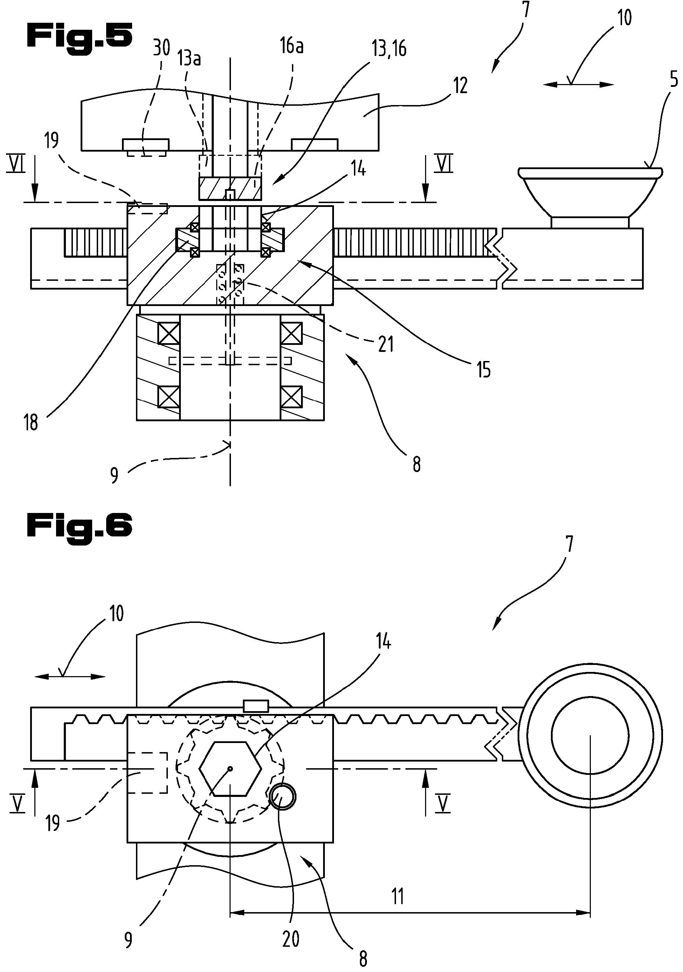

Eine weitere mögliche Ausführung einer Koppelungseinheit 12 mit einem Antriebsmechanismus 16 zur Verstellen eines Stellmechanismus 15 ist in Fig. 5 und 6 dargestellt, wobei der Antriebsmechanismus 16 gleichzeitig das Eingriffselement 13 umfasst und im Bereich des Eingriffsabschnitt 14 der Stellmechanismus 15 vorgesehen ist.

Die in Fig. 5 und 6 dargestellte Ausführungsform des Eingriffselementes 13 eignet sich zur Drehung des Aufnahmeelementes 7 um die Lagerachse 9 mittels des Eingriffsabschnittes 14 als auch zur Koppelung und Betätigung des Stellmechanismus 15. Alternativ können an der Koppelungseinheit auch ein separat rotierbares Eingriffselement 13a vorgesehen, sowie einen separat rotierbares Antriebselement des Antriebsmechanismus 16a, welche zur zeitgleichen Veranlassung der Drehung um die Lagerachse 9 sowie der Verstellung entlang der Stellrichtung 10 vorgesehen sind, wie strichliert angedeutet ist.

Bezüglich der Stellrichtung 10 zur Bestimmung des Abstandes 11 kann am Aufnahmeelement 7 wiederum ein erfassbares Referenzmittel 20 vorgesehen sein. Ferner kann das Referenzmittel 20 im Stellmechanismus 15 integriert sein, sodass dieses z.B. mit der Drehbewegung des Stellmechanismus 15 ebenfalls verstellbar ist. Beispielsweise kann ein Referenzmittel 20 über den Stellmechanismus 15 durch den Antriebsmechanismus 16 entlang einer Richtung parallel zur Lagerachse 9 verstellbar sein, wobei die aktuelle Position des Referenzmittels 20 bezüglich dieser Richtung durch die Koppelungseinheit erfassbar ist, wodurch der Abstand 11 bestimmt werden kann.

Ferner kann eine zuvor erwähnte Arretierungseinheit 21 vorgesehen sein, wobei die Arretierungseinheit 21 beispielsweise durch das Einführen des Antriebsmechanismus 16 bzw. durch das Eingriffselement 13 entriegelbar ist, wie in Fig. 5 mit der Arretierungseinheit 21 strichliert angedeutet ist, sowie der dafür vorgesehenen Ausnehmung am Eingriffselement.

Ja nach Ausführung kann die Detektionseinheit 30 mit dem Eingriffselement 13 bevorzugt mit drehbar sein, sodass diese zur Detektion des Referenzmittels 20 bezüglich der Orientierung der Stellrichtung 10 in Drehrichtung zur Lagerachse 9 mit verfahren wird. Beispielsweise können sich zumindest Teile der Koppelungseinheit 12 mit dem Eingriffselement 13 mitdrehen, oder eine mit der Drehung des Eingriffselementes 13 gekoppelte Drehscheibe oder dergleichen für die Detektionseinheit aufweisen.

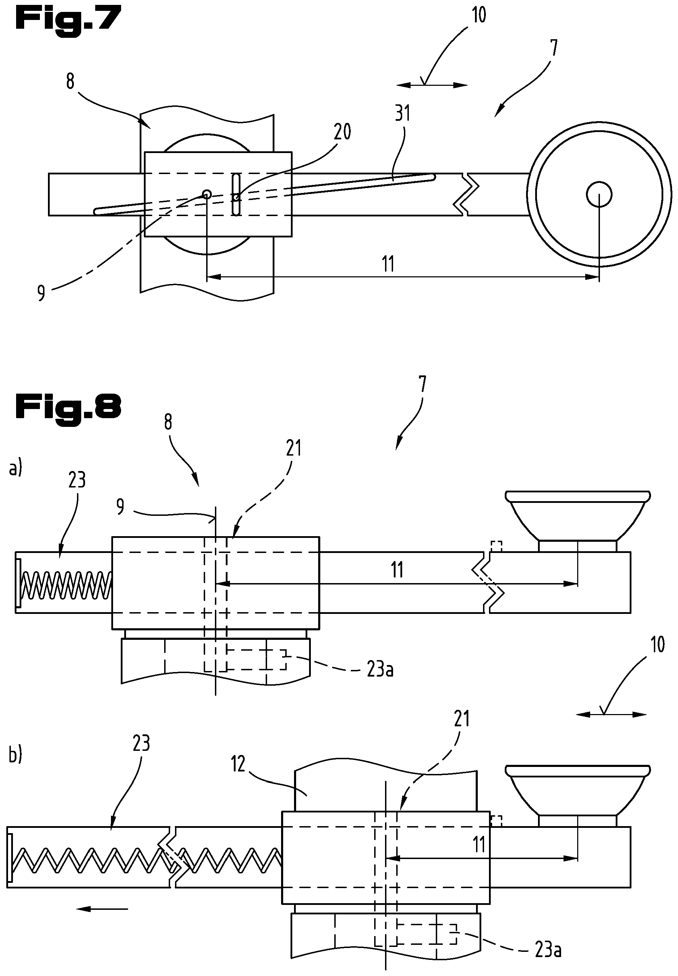

Weiters kann vorgesehen sein, dass das Referenzmittel 20, durch einen Mitnehmer ausgebildet ist, welcher durch die Verstellung des Aufnahmeelementes 7 entlang der Stellrichtung 10 mittels einer Kulisse 31 quer zur Stellrichtung 10 verstellbar ist, wie in Fig. 7 angedeutet ist, wobei mittels der Koppelungseinheit die Verschiebung des Mitnehmers quer zur Stellrichtung detektierbar ist und somit der Abstand 11 feststellbar ist.

Ferner und unabhängig von den jeweiligen Mechanismen zur Verstellung des Aufnahmeelementes kann das Aufnahmeelement 7 zumindest eine Rückstellanordnung 23 aufweisen, wobei mittels der Rückstellanordnung 23 das Aufnahmeelement 7 bezüglich der Verstellung entlang Stellrichtung 10 und/oder bezüglich der Drehung um die Lagerachse 9 in eine vorbestimmte Ausgangsposition rückstellbar ist, wobei die Rückstellanordnung 23 mittels der Koppelungseinheit 12 betätigbar ist.

Die Rückstellanordnung 23 kann z.B. mittels eines Druckluftsystems realisierbar sein, sodass zur Rückstellung am Aufnahmeelement ein Druckluftkanal vorgesehen ist, welcher mittels des Manipulators bzw. über die Koppelungseinheit mit Druckluft beaufschlagt werden kann, wodurch die Rückstellung veranlasst wird.

Mittels dieser Ausgestaltung kann bezüglich der Stellrichtung 10 immer dieselbe Ausgangsposition für den Manipulator zur Einstellung des Abstandes 11 mit der Rückstellanordnung 23 hergestellt werden, wie in Fig. 8 mit den Stellungen a) und b) dargestellt ist. Die Rückstellanordnung 23 in Fig. 8 umfasst beispielhaft ein elastisches Federelement, sie kann aber auch andere Mittel umfassen, mittels denen eine lineare Rückstellung veranlassbar ist.

Beispielsweise kann auch in einem zuvor beschriebenen Stellmechanismus eine Rückstellanordnung integriert sein, welche den Stellmechanismus, z.B. einzelne Zahnräder in eine Ausgangsposition versetzen kann.

Zudem kann bezüglich der Drehung um die Lagerachse 9 ebenfalls eine Rückstellanordnung vorgesehen sein, welche das Aufnahmeelement 7 in eine Ausgangsposition bzw. einen Ausgangswinkel bezüglich der Lagerachse 9 zurückstellt, wie mit der Rückstellanordnung 23a angedeutet ist. Die Rückstellung bezüglich der Lagerachse 9 kann bevorzugt einer rechtwinkeligen Position der Aufnahmeelemente 7 zu ihrer Trägeranordnung der Aufnahmevorrichtung entsprechen (gemäß der Ausrichtung in Fig. 1).

Zur Hemmung bzw. Verriegelung der Rückstellanordnungen im Betrieb kann eine eigene Verriegelung hierfür vorgesehen sein, welche wiederum mit der Koppelungseinheit aktivierbar bzw. deaktivierbar ist. Bevorzugt können die Rückstellanordnungen 23, 23a auch mittels der Arretierungseinheit 21 betätigbar sein, bzw. auch an die Arretierung des Aufnahmeelementes 7 gekoppelt sein. Weiters kann die Rückstellung auch durch ein zuvor erwähntes Reibelement gehemmt werden, dessen Anpresskraft oder Position z.B. mittels der Koppelungseinheit verstellt werden kann.

Je nach Ausführung der Rückstellanordnung können weitere Elemente, wie z.B. Begrenzungselemente vorgesehen sein, welche die Rückstellbewegung begrenzen z.B. bezüglich der Stellrichtung einen Begrenzungsanschlag ausbilden.

Weiters kann vorgesehen sein, dass alle Rückstellanordnungen der einzelnen Aufnahmeelemente der Aufnahmevorrichtung miteinander derart gekoppelt sind, dass diese mit einer Betätigung durch die Koppelungseinheit bzw. durch den Manipulator miteinander rückstellbar sind.

In den Figuren 3 bis 8 sind weitere und gegebenenfalls für sich eigenständige Ausführungsformen der Aufnahmeelemente und der Koppelungseinheit gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren hingewiesen bzw. Bezug genommen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Fertigungsanlage
- 2: Bauteil
- 3: Umformmaschine
- 4: Aufnahmevorrichtung
- 5: Aufnahmeebene
- 6: Manipulator
- 7: Aufnahmeelement
- 8: Lagereinheit
- 9: Lagerachse
- 10: Stellrichtung
- 11: Abstand
- 12: Koppelungseinheit
- 13: Eingriffselement
- 14: Eingriffsabschnitt
- 15: Stellmechanismus
- 16: Antriebsmechanismus
- 17: Verzahnung
- 18: Antriebselement
- 19: Positionierungsmittel
- 20: Referenzmittel
- 21: Arretierungseinheit
- 22: Reibelement
- 23: Rückstellanordnung
- 24: Aufnahmeeinheiten
- 25: auswechselbarer Werkzeugkopf
- 26: Richtung
- 27: Bewegungsbereich
- 28: Steuerungsvorrichtung
- 29: Anschlagelement
- 30: Detektionseinheit
- 31: Kulisse

## Patentansprüche

1. Fertigungsanlage (1) zur Bearbeitung von plattenförmigen Bauteilen (2), umfassend;
- zumindest eine Umformmaschine (3) zum Umformen der Bauteile (2); mit zumindest einer verstellbaren Aufnahmevorrichtung (4), wobei mittels der Aufnahmevorrichtung (4) eine Aufnahmeebene (5) zur Zwischenlagerung der Bauteile (2) definiert ist;
- zumindest einen Manipulator (6) zur Handhabung der Bauteile (2); wobei der Manipulator (6) dazu ausgebildet ist, die Bauteile (2) bezüglich der Zwischenlagerung an der Aufnahmevorrichtung (4) abzulegen und aufzunehmen;
wobei die Aufnahmevorrichtung (4) einzelne, in der Aufnahmeebene (5) verstellbare Aufnahmeelemente (7) umfasst; und ein jeweiliges Aufnahmeelement (7) eine Lagereinheit (8) aufweist und mittels der Lagereinheit (8) um eine senkrecht zur Aufnahmeebene (5) angeordneten Lagerachse (9) drehbar ist und entlang einer parallel zur Aufnahmeebene (5) und senkrecht zu der Lagerachse (9) angeordneten Stellrichtung (10) in einem Abstand (11) zur Lagerachse (9) längenverstellbar ist,
**dadurch gekennzeichnet, dass**
der Manipulator (6) eine Koppelungseinheit (12) umfasst, wobei mittels der Koppelungseinheit (12) ein Koppelungszustand mit den jeweiligen Aufnahmeelementen (7) herstellbar ist und die Aufnahmeelemente (7) im Koppelungszustand mittels des Manipulators (6) bezüglich der Lagerachse (9) drehbar und/oder bezüglich der Stellrichtung (10) verstellbar sind.

2. Fertigungsanlage (1) nach Anspruch 1, **dadurch gekennzeichnet, dass** die Koppelungseinheit (12) ein Eingriffselement (13) zur Drehung des Aufnahmeelementes (7) bezüglich der Lagerachse (9) aufweist, wobei am Aufnahmeelement (7) zumindest ein Eingriffsabschnitt (14) zur Koppelung mit dem Eingriffselement (13) vorgesehen ist.

3. Fertigungsanlage (1) nach Anspruch 2, **dadurch gekennzeichnet, dass** das Eingriffselement (13) ferner zur Verstellung des Aufnahmeelementes bezüglich der Stellrichtung (10) ausgebildet ist.

4. Fertigungsanlage (1) nach einem der Ansprüche 1 bis 3, **dadurch gekennzeichnet, dass** das Aufnahmeelement (7) einen Stellmechanismus (15) zum Verstellen des Abstandes (11) des Aufnahmeelementes (7) gegenüber der Lagereinheit (8) bezüglich der Stellrichtung (10) umfasst und dass die Koppelungseinheit (12) einen Antriebsmechanismus (16) umfasst, wobei mittels des Antriebsmechanismus (16) der Stellmechanismus (15) verstellbar ist.

5. Fertigungsanlage (1) nach Anspruch 4, **dadurch gekennzeichnet, dass** der Stellmechanismus (15) eine Verzahnung (17) aufweist, wobei mittels des Antriebsmechanismus (16) ein mit der Verzahnung (17) in Wirkeingriff bringbares Antriebselement (18) antreibbar ist.

6. Fertigungsanlage (1) nach einem der Ansprüche 1 bis 5, **dadurch gekennzeichnet, dass** am Aufnahmeelement (7) ein Positionierungsmittel (19) zur Feststellung einer aktuellen Drehposition des Aufnahmeelementes (7) bezüglich der Lagerachse (9) vorgesehen ist, wobei das Positionierungsmittel (19) mittels der Koppelungseinheit (12) erfassbar ist.

7. Fertigungsanlage (1) nach Anspruch 6, **dadurch gekennzeichnet, dass** das Positionierungsmittel (19) ein Permanentmagnet ist.

8. Fertigungsanlage (1) nach einem der Ansprüche 1 bis 7, **dadurch gekennzeichnet, dass** am Aufnahmeelement (7) ein Referenzmittel (20) zur Feststellung einer Längsposition des Aufnahmeelementes (7) bezüglich der Stellrichtung (10) vorgesehen ist, wobei das Referenzmittel (20) mittels der Koppelungseinheit (12) erfassbar ist.

9. Fertigungsanlage (1) nach Anspruch 8, **dadurch gekennzeichnet, dass** die Koppelungseinheit (12) eine Näherungssensorik umfasst, wobei mittels des Referenzmittels (20) eine messbare Größe der Näherungssensorik ausgebildet ist.

10. Fertigungsanlage (1) nach einem der Ansprüche 1 bis 9, **dadurch gekennzeichnet, dass** das Aufnahmeelement (7) eine Arretierungseinheit (21) aufweist, wobei die Arretierungseinheit (21) mittels der Koppelungseinheit (12) im Koppelungszustand entriegelbar ist und das Aufnahmeelement (7) mittels der Arretierungseinheit (21) außerhalb des Koppelungszustand bezüglich zumindest einer der folgenden Bewegungen verriegelt ist:
- eine Drehung des Aufnahmeelementes (7) bezüglich der Lagerachse (9);
- eine Verstellung des Aufnahmeelementes (7) bezüglich der Stellrichtung (10).

11. Fertigungsanlage (1) nach einem der Ansprüche 1 bis 10, **dadurch gekennzeichnet, dass** das Aufnahmeelement (7) bezüglich der Verstellung entlang der Stellrichtung (10) und/oder der Drehung bezüglich der Lagerachse (9) ein Reibelement (22) aufweist, sodass eine jeweilige Bewegung des Aufnahmeelementes (7) schwergängig ist.

12. Fertigungsanlage (1) nach einem der Ansprüche 1 bis 11, **dadurch gekennzeichnet, dass** das Aufnahmeelement (7) zumindest eine Rückstellanordnung (23) aufweist, wobei mittels der Rückstellanordnung (23) das Aufnahmeelement (7) bezüglich der Verstellung entlang Stellrichtung (10) und/oder bezüglich der Drehung um die Lagerachse (9) in eine vorbestimmte Ausgangsposition rückstellbar ist, wobei die Rückstellanordnung (23) mittels der Koppelungseinheit (12) betätigbar ist.

13. Fertigungsanlage (1) nach einem der Ansprüche 1 bis 12, **dadurch gekennzeichnet, dass** die Aufnahmevorrichtung (4) zumindest zwei Aufnahmeeinheiten (24) umfasst, wobei die Aufnahmeeinheiten (24) in einer Richtung parallel zur Aufnahmeebene (5) zueinander verstellbar sind und jeweils die einzelnen Aufnahmeelemente (7) aufweisen.

14. Fertigungsanlage (1) nach einem der Ansprüche 1 bis 13, **dadurch gekennzeichnet, dass** die Koppelungseinheit (12) dazu ausgebildet ist, mehrere Aufnahmeelemente (7) gleichzeitig bezüglich der jeweiligen Lagerachse (9) zu drehen und/oder bezüglich der jeweiligen Stellrichtung (10) zu verstellen.

15. Fertigungsanlage (1) nach einem der Ansprüche 1 bis 14, **dadurch gekennzeichnet, dass** die Koppelungseinheit (12) als ein auswechselbarer Werkzeugkopf (25) des Manipulators (6) ausgebildet ist.

## Claims

1. A production system (1) for processing plate-like components (2) comprising
- at least one forming machine (3) for forming the components (2) with at least one adjustable receiving device (4), wherein the receiving device (4) defines a receiving plane (5) for the intermediate storage of the components (2);
- at least one handling system (6) for handling the components (2), wherein the handling system (6) is configured to deposit and receive the components (2) according to the intermediate storage at the receiving device (4),
wherein the receiving device (4) comprises separate receiving elements (7) that are adjustable in the receiving plane (5) and each receiving element (7) comprises a bearing unit (8), by means of which bearing unit (8) it is rotatable about a bearing axle (9) arranged perpendicular to the receiving plane (5) and is adjustable longitudinally in an actuation direction (10) parallel to the receiving plane (5) and perpendicular to the bearing axle (9) at a spacing (11) to the bearing axle (9),
**characterized in that**
the handling system (6) comprises a coupling unit (12), wherein the coupling unit (12) is configured to establish a coupling state with the respective receiving elements (7) and in the coupling state the receiving elements (7) are rotatable with respect to the bearing axle (9) and/or adjustable with respect to the actuation direction (10) by the handling system (6).

2. The production system (1) according to claim 1, **characterized in that** the coupling unit (12) comprises an engaging element (13) for rotating the receiving element (7) in relation to the bearing axle (9), wherein at least one engaging section (14) is provided on the receiving element (7) for coupling with the engaging element (13).

3. The production system (1) according to claim 2, **characterized in that** the engaging element (13) is further configured to adjust the receiving element in relation to the actuation direction (10).

4. The production system (1) according to one of claims 1 to 3, **characterized in that** the receiving element (7) comprises an actuation mechanism (15) to adjust the spacing (11) of the receiving element (7) to the bearing unit (8) in relation to the actuation direction (10) and **in that** the coupling unit (12) comprises a drive mechanism (16), wherein the actuation mechanism (15) is adjustable by means of the drive mechanism (16).

5. The production system (1) according to claim 4, **characterized in that** the actuation mechanism (15) comprises a gearing (17), wherein a drive element (18) that can be brought into operative engagement with the gearing (17) is drivable by means of the drive mechanism (16).

6. The production system (1) according to one of claims 1 to 5, **characterized in that** a positioning means (19) for determining a current rotary position of the receiving element (7) in relation to the bearing axle (9) is provided on the receiving element (7), wherein the positioning means (19) is detectable by means of the coupling unit (12).

7. The production system (1) according to claim 6, **characterized in that** the positioning means (19) is a permanent magnet.

8. The production system (1) according to one of claims 1 to 7, **characterized in that** a reference means (20) for determining a longitudinal position of the receiving element (7) in relation to the actuation direction (10) is provided on the receiving element (7), wherein the reference means (20) is detectable by means of the coupling unit (12).

9. The production system (1) according to claim 8, **characterized in that** the coupling unit (12) comprises a proximity sensor, wherein a measurable variable of the proximity sensor is provided by the reference means (20).

10. The production system (1) according to one of claims 1 to 9, **characterized in that** the receiving element (7) comprises a locking unit (21), wherein the locking unit (21) is unlockable by means of the coupling unit (12) in the coupling state and the receiving element (7) is lockable by means of the locking unit (21) when not in the coupling state with respect to at least one of the following movements:
- a rotation of the receiving element (7) in relation to the bearing axle (9);
- an adjustment of the receiving element (7) in relation to the actuation direction (10).

11. The production system (1) according to one of claims 1 to 10, **characterized in that** the receiving element (7) comprises a friction element (22) with respect to the adjustment in the actuation direction (10) and/or the rotation with respect to the bearing axle (9), such that a corresponding movement of the receiving element (7) is sluggish.

12. The production system (1) according to one of claims 1 to 11, **characterized in that** the receiving element (7) comprises at least one return assembly (23), wherein the receiving element (7) is returned to a pre-determined starting position by means of the return assembly (23) with respect to an adjustment along the actuation direction (10) and or a rotation with respect to the bearing axle (9), wherein the return assembly (23) is actuated by means of the coupling unit (12).

13. The production system (1) according to one of claims 1 to 12, **characterized in that** the receiving device (4) comprises at least two receiving units (24), wherein the receiving units (24) are adjustable towards one another in a direction parallel to the receiving plane (5) and each have the separate receiving elements (7).

14. The production system (1) according to one of claims 1 to 13, **characterized in that** the coupling unit (12) is configured to simultaneously rotate a plurality of receiving elements (7) with respect to the respective bearing axle (9) and/or adjust them with respect to the respective actuation direction (10).

15. The production system (1) according to one of claims 1 to 14, **characterized in that** the coupling unit (12) is configured as an exchangeable tool head (25) of the handling system (6).

## Revendications

1. Installation de fabrication (1) pour l'usinage de composants (2) en forme de plaque, comprenant :
- au moins une machine de formage (3) permettant de former les composants (2) ; avec au moins un dispositif de réception (4) réglable, dans laquelle un plan de réception (5) permettant le stockage intermédiaire des composants (2) est défini au moyen du dispositif de réception (4) ;
- au moins un manipulateur (6) permettant de manipuler les composants (2) ; dans laquelle le manipulateur (6) est conçu pour déposer et recevoir les composants (2) au niveau du dispositif de réception (4) relativement au stockage intermédiaire ;
dans laquelle le dispositif de réception (4) comprend des éléments de réception (7) individuels réglables dans le plan de réception (5) ; et un élément de réception (7) respectif présente une unité de palier (8) et peut être tourné au moyen de l'unité de palier (8) autour d'un axe de palier (9) agencé perpendiculairement au plan de réception (5) et peut être réglé en longueur le long d'une direction de réglage (10) parallèle au plan de réception (5) et perpendiculairement à l'axe de palier (9) à une distance (11) de l'axe de palier (9),
**caractérisée en ce que**
le manipulateur (6) comprend une unité de couplage (12), dans laquelle un état de couplage avec les éléments de réception (7) respectifs peut être établi au moyen de l'unité de couplage (12) et les éléments de réception (7) peuvent, dans l'état de couplage, être tournés par rapport à l'axe de palier (9) et/ou être réglés par rapport à la direction de réglage (10) au moyen du manipulateur (6).

2. Installation de fabrication (1) selon la revendication 1, **caractérisée en ce que** l'unité de couplage (12) présente un élément de mise en prise (13) permettant de tourner l'élément de réception (7) par rapport à l'axe de palier (9), dans laquelle au moins une section de mise en prise (14) permettant le couplage avec l'élément de mise en prise (13) est prévue au niveau de l'élément de réception (7).

3. Installation de fabrication (1) selon la revendication 2, **caractérisée en ce que** l'élément de mise en prise (13) est en outre conçu pour le réglage de l'élément de réception par rapport à la direction de réglage (10).

4. Installation de fabrication (1) selon l'une quelconque des revendications 1 à 3, **caractérisée en ce que** l'élément de réception (7) comprend un mécanisme de réglage (15) permettant de régler la distance (11) de l'élément de réception (7) vis-à-vis de l'unité de palier (8) par rapport à la direction de réglage (10) et **en ce que** l'unité de couplage (12) comprend un mécanisme d'entraînement (16), dans laquelle le mécanisme de réglage (15) peut être réglé au moyen du mécanisme d'entraînement (16).

5. Installation de fabrication (1) selon la revendication 4, **caractérisée en ce que** le mécanisme de réglage (15) présente une denture (17), dans laquelle un élément d'entraînement (18) pouvant être mis en prise active avec la denture (17) peut être entraîné au moyen du mécanisme d'entraînement (16).

6. Installation de fabrication (1) selon l'une quelconque des revendications 1 à 5, **caractérisée en ce qu'**un moyen de positionnement (19) permettant de déterminer une position de rotation actuelle de l'élément de réception (7) par rapport à l'axe de palier (9) est prévu au niveau de l'élément de réception (7), dans laquelle le moyen de positionnement (19) peut être détecté au moyen de l'unité de couplage (12).

7. Installation de fabrication (1) selon la revendication 6, **caractérisée en ce que** le moyen de positionnement (19) est un aimant permanent.

8. Installation de fabrication (1) selon l'une quelconque des revendications 1 à 7, **caractérisée en ce qu'**un moyen de référence (20) permettant de déterminer une position longitudinale de l'élément de réception (7) par rapport à la direction de réglage (10) est prévu au niveau de l'élément de réception (7), dans laquelle le moyen de référence (20) peut être détecté au moyen de l'unité de couplage (12).

9. Installation de fabrication (1) selon la revendication 8, **caractérisée en ce que** l'unité de couplage (12) comprend un système de capteurs de proximité, dans laquelle une grandeur mesurable du système de capteurs de proximité est formée au moyen du moyen de référence (20).

10. Installation de fabrication (1) selon l'une quelconque des revendications 1 à 9, **caractérisée en ce que** l'élément de réception (7) présente une unité de verrouillage (21), dans laquelle l'unité de verrouillage (21) peut être déverrouillée dans l'état de couplage au moyen de l'unité de couplage (12) et l'élément de réception (7) est verrouillé hors de l'état de couplage au moyen de l'unité d'arrêt (21) relativement à au moins un des mouvements ci-dessous :
- une rotation de l'élément de réception (7) par rapport à l'axe de palier (9) ;
- un réglage de l'élément de réception (7) par rapport à la direction de réglage (10).

11. Installation de fabrication selon l'une quelconque des revendications 1 à 10, **caractérisée en ce que** l'élément de réception (7) présente un élément de friction (22) relativement au déplacement le long de la direction de réglage (10) et/ou relativement à la rotation par rapport à l'axe de palier (9), de sorte qu'un mouvement respectif de l'élément de réception (7) est rendu difficile.

12. Installation de fabrication (1) selon l'une quelconque des revendications 1 à 11, **caractérisée en ce que** l'élément de réception (7) présente au moins un dispositif de rappel (23), dans laquelle l'élément de réception (7) peut être rappelé dans une position initiale prédéterminée au moyen du dispositif de rappel (23) relativement au déplacement le long de la direction de réglage (10) et/ou relativement à la rotation autour de l'axe de palier (9), dans laquelle le dispositif de rappel (23) peut être actionné au moyen de l'unité de couplage (12).

13. Installation de fabrication (1) selon l'une quelconque des revendications 1 à 12, **caractérisée en ce que** le dispositif de réception (4) comprend au moins deux unités de réception (24), dans laquelle les unités de réception (24) peuvent être déplacées l'une par rapport à l'autre dans une direction parallèle au plan de réception (5) et présentent respectivement les éléments de réception (7) individuels.

14. Installation de fabrication (1) selon l'une quelconque des revendications 1 à 13, **caractérisée en ce que** l'unité de couplage (12) est conçue pour faire tourner plusieurs éléments de réception (7) simultanément par rapport à l'axe de palier (9) respectif et/ou pour les déplacer par rapport à la direction de réglage (10) respective.

15. Installation de fabrication (1) selon l'une quelconque des revendications 1 à 14, **caractérisée en ce que** l'unité de couplage (12) est conçue sous la forme d'une tête d'outil (25) remplaçable du manipulateur (6).
